# EUROPEAN PATENT APPLICATION

(11) **EP 2 251 225 A1**
(43) Date of publication of application: **17.11.2010**
(21) Application number: 10160524.4
(22) Date of filing: 21.04.2010
(51) Int. Cl.: B60N 2/28

(54) **Security carrycot for automobiles**

(30) Priority: 28.04.2009 ES 200930106
(71) Applicant: Play, S.A., 08184 Palau-Solità I Plegamans (ES)
(72) Inventor: Jane Stopp, Joaquin, 08184 Palau de Plegamans (ES)
(74) Representative: Ponti Sales, Adelaida

(57) **Abstract**

The security carrycot for automobiles comprises means for fixing it to the automobile seat, and it is **characterized in that** said fixation means to the automobile seat comprises a fixation mechanism (1; 10) provided with hooks (2; 20), said fixation mechanism (1; 10) being integrated in the carrycot structure.

Said fixation mechanism (1; 10) comprises a pair of bars (6; 60) provided with said hooks (2; 20).

It permits a more comfortable and cheaper fixation of the carrycot to the automobile seat than in the currently known carrycots, with no additional element needed, such as a base.

## Description

### SECURITY CARRYCOT FOR AUTOMOBILES

The present invention refers to a security carrycot for automobiles, of Group 0 or 0+ according to ECE R44/04 regulations, i.e. it can be used for baby up to 13 kg of weight.

### BACKGROUND OF THE INVENTION

The currently known carrycots comprise means for its fixation to the automobile seat by the automobile seat itself.

In the practice, it is clear that the fixation of the carrycot to the automobile seat is uncomfortable, taking into account that the carrycot is also used in a stroller, which means that it is removed and placed even each day.

To solve these drawbacks bases were designed, which are fixed to the automobile seat. These bases can be fixed to the automobile seat by the seatbelt of the automobile or by hooks that are engaged to rods integral with the frame of the automobile, commonly known as Isofix system.

These bases permit to detachably engage the carrycot when it is used in the automobile.

These bases achieve their objective of making the fixation of the carrycot to the automobile seat easier, but they have the drawback of its cost, because the base is an additional piece independent from the carrycot.

Therefore, it is an objective of the present invention to obtain a security carrycot for automobiles that can be fixed to the automobile seat with no additional element, such as a base, with the corresponding economic savings.

### DESCRIPTION OF THE INVENTION

With the carrycot of the invention said drawbacks can be solved, presenting other advantages that will be described.

The security carrycot for automobiles of the present invention comprises means for its fixation to the automobile seat, and it is **characterized in that** said fixation means to the automobile seat comprises a fixation mechanism provided with hooks, said fixation mechanism being integrated in the carrycot structure.

Thanks to this feature, the fixation of the carrycot of the present invention to the automobile seat is more comfortable and cheaper than in the currently known carrycots, with no additional element being necessary, such as a base.

Advantageously, said fixation mechanism comprises a pair of bars provided with said hooks.

Furthermore, the carrycot of the present invention also comprises advantageously means for regulating the longitudinal position of said bars with respect to the structure of the carrycot.

According to first embodiment, said regulating means of the position of the bars comprises a rotatable knob provided with a threaded rod, said threaded rod being linked with a transversal bar integral with said bars, so that the driving to said rotatable knob moves said transversal bar through said threaded rod.

Preferably, said rotatable knob is placed in the frontal part of the carrycot, and said bars and said transversal rod are integral with a U-shape.

According to a second embodiment, said regulating means of the bars position comprises tubular elements integral with the carrycot structure, inside which said bars slide.

According to this embodiment, said hooks are advantageously integral with a transversal bar placed between one of the ends of said bars, said transversal bar being rotatable to place said hooks in an use position, in which they are aligned with respect to said bars, and a folded position, in which said hooks are folded to the carrycot structure.

Said transversal bar is formed advantageously by two portions separated by a spring.

Preferably, said transversal bar is housed inside a cylindrical case, said transversal bar comprising a pair of protrusions that are housed inside complementary grooves of the case in its folded position, pressing a spring provided in said transversal bar said protrusions against the side wall of said grooves.

### BRIEF DESCRIPTION OF THE DRAWINGS

For a better understanding to what has been described, some drawings are attached in which, diagrammatically and only as a non-limitative example, a practical case of embodiment is shown.
Fig. 1 is a lower plan view of the carrycot of the present invention, according to a first embodiment; and
Fig. 2 and 3 are perspective views of the lower part of the carrycot of the present invention, according to a second embodiment, the hooks being in a use position and in a folded position, respectively.

### DESCRIPTION OF PREFERRED EMBODIMENTS

Firstly, it must be pointed out that in the present description and in the attached claims carrycot means any infant retention system for automobiles of Group 0 or 0+ according to regulation ECE R44/04. Therefore, a carrycot is not a security infant seat of Groups 1, 2 or 3 according to regulation ECE R44/04.

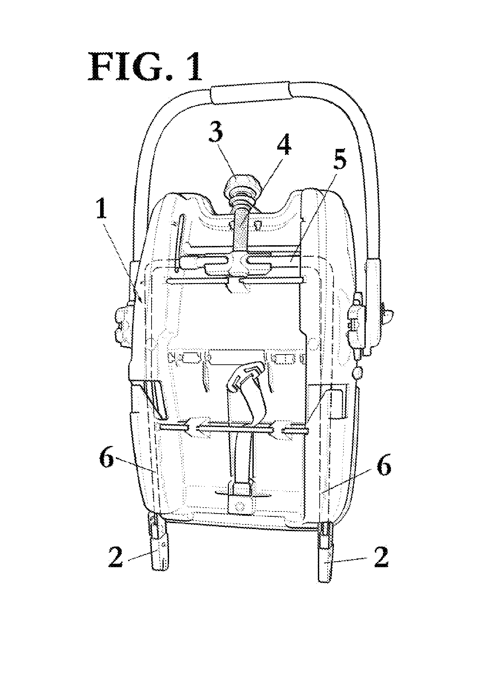

As shown in Fig. 1, according to a first embodiment, the carrycot of the present invention comprises a fixation mechanism, identified generally by numeral reference 1, comprising a pair of bars 6 provided with a hook 2 at one of the ends. This hook is a part of the system known as Isofix, being fixed to rods (not shown) provided in the automobile seat and integral with its frame.

These bars 6 are integrated in the structure of the carrycot, i.e. they are not an element independent from the carrycot, as is the case of a conventional engaging base.

As used in the present specification "integrated" means that the bars 6 are integral with the carrycot structure, i.e. the bars 6 are securely fixed to the carrycot structure, not being detached from the carrycot structure during the normal use of the carrycot.

The position of said bars 6 with respect to the structure of the carrycot can be regulated by a rotatable knob 3 placed at the frontal part of the carrycot.

This rotatable knob 3 is rotatably integral with a threaded rod 4, which is linked with a transversal bar 5 integral with said bars 6.

In the embodiment shown, said transversal bar 5 is made from one piece with said bars 6, forming a U-shaped piece.

Hence, when the rotatable knob 3 is driven, said transversal bar 5 is moved through said threaded rod 4, separating or moving away said hooks 2 with respect to the carrycot structure.

The aim of the adjustment of this position is to adapt the position of the hooks 2 to the backrest of the automobile seat, which is not constant for all the automobiles.

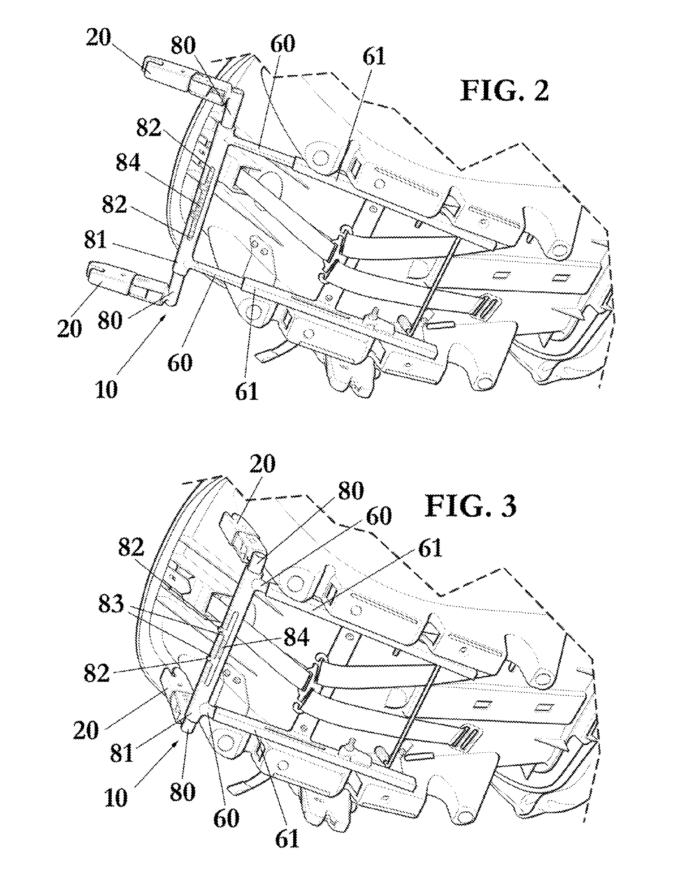

In Figs. 2 and 3 is shown a second embodiment of the carrycot of the present invention.

In the description of this second embodiment the same numeral references are used, for common or equivalent elements, adding a zero. Therefore, e.g. the fixation element is indicated by numeral reference 10 and the bars by numeral reference 60.

As in the previous embodiment, the security carrycot of the present invention, according to this second embodiment, comprises a fixation element 10, comprising bars 60 provided with a pair of hooks 20, said fixation element 10 being integrated in the carrycot structure.

These two bars 60 are joined to each other by a transversal bar 80, which comprises said hooks 20 at its ends. This transversal bar 80 is rotatable, so that it defines two positions of the hooks 20, a use position, shown in Fig. 2, and a folded position, shown in Fig. 3. In this folded position, the hooks 20 do not protrude substantially from the carrycot structure.

To this end, the transversal bar 80 is housed inside a cylindrical case 81, whose rotation can be locked by any suitable system. Said transversal bar 80 is formed by two portions with a spring 84 between them. Therefore, e.g. in Figs. 2 and 3 it can be seen that each of the portions of said transversal bar 80 comprises a pair of protrusions 82 which are housed, in the folded position, inside grooves 83 provided in said cylindrical case 81. In this position, the spring 84 is compressed.

In the use position, the spring 84 is in its unfolded position, so that to pass from this position to the folded position it is necessary to apply a longitudinal force on the ends of the transversal bar 80, compressing the spring 84.

In the use position, said hooks 20 are substantially aligned with said bars 60, and in the folded position said hooks 20 are rotated to the carrycot structure, do not protruding substantially from the carrycot structure.

The position of the bars 60 can be regulated to be adapted to the thickness of the upholstery of the automobile seat where the carrycot is installed.

To this end, the bars 60 are slidably housed inside tubular elements 61. The position of the bars 60 is determined by any suitable locking system, e.g. a ratchet system (not shown) that is locked in teeth.

Even though reference is made to a specific embodiment of the embodiment, it is evident for a person skilled in the art that the described carrycot is susceptible of numerous variations and modifications, and that all the details mentioned can be substituted by other technically equivalent ones, without departing from the scope of protection defined by the attached claims.

## Claims

1. Security carrycot for automobiles, comprising means for fixing it to the automobile seat, **characterized in that** said fixation means to the automobile seat comprises a fixation mechanism (1; 10) provided with hooks (2; 20), said fixation mechanism (1; 10) being integrated in the carrycot structure.

2. Carrycot according to claim 1, wherein said fixation mechanism (1; 10) comprises a pair of bars (6; 60) provided with said hooks (2; 20).

3. Carrycot according to claim 2, comprising means to regulate the longitudinal position of said bars (6; 60) with respect to the carrycot structure.

4. Carrycot according to claim 3, wherein said regulating means of the position of the bars (6) comprises a rotatable knob (3) provided with a threaded rod (4), said threaded rod (4) being linked with a transversal bar (5) integral with said bars (6), so that when said rotatable knob (3) is driven, it moves said transversal bar (5) through said threaded rod (4).

5. Carrycot according to claim 4, wherein said rotatable knob (3) is placed at the frontal part of the carrycot.

6. Carrycot according to claim 4, wherein said bars (6) and said transversal bar (5) are made from a U-shaped single piece.

7. Carrycot according to claim 4, wherein said means for regulating the position of the bars (60) comprises tubular elements (70) integral with the carrycot structure, inside which said bars (60) slide.

8. Carrycot according to claim 2, wherein said hooks (20) are integral with a transversal bar (80) placed between one of the ends of said bars (60), said transversal bar (80) being rotatable to place said hooks (20) in a use position, in which they are aligned with respect to said bars (60), and a folded position, in which said hooks (20) are folded to the carrycot structure, not protruding substantially from the carrycot structure.

9. Carrycot according to claim 8, wherein said transversal bar (80) is formed by to portions separated by a spring (84).

10. Carrycot according to claim 8 or 9, wherein said transversal bar (80) is housed inside a cylindrical case (81), said transversal bar (80) comprising a pair of protrusions (82) housed inside complementary grooves (83) of the case in its folded position.
